# EUROPEAN PATENT SPECIFICATION

(11) **EP 3 832 857 B1**
(45) Date of publication and mention of the grant of the patent: **28.02.2024**
(21) Application number: 19844798.9
(22) Date of filing: 01.08.2019
(51) Int. Cl.: H02K 9/06, H02K 7/10, H02K 7/108, H02K 7/12, H02K 11/25

(54) **DEVICE FOR THE INTERMITTENT OPERATION OF THE COOLING FAN OF THREE-PHASE INDUCTION MOTORS, CONTROLLED BY THE TEMPERATURE OF THE STATOR WINDING**
VORRICHTUNG ZUM INTERMITTIERENDEN BETRIEB DES KÜHLGEBLÄSES VON DREHSTROMMOTOREN MIT STEUERUNG DURCH DIE TEMPERATUR DER STATORWICKLUNG
DISPOSITIF POUR L'ACTIONNEMENT INTERMITTENT DU VENTILATEUR DE REFROIDISSEMENT DE MOTEURS TRIPHASÉS À INDUCTION, COMMANDÉ PAR LA TEMPÉRATURE DE L'ENROULEMENT DU STATOR

(30) Priority: 03.08.2018 CO 18008244
(43) Date of publication of application: 09.06.2021
(73) Proprietor: Corporacion Universidad de la Costa, Barranquilla (CO)
(72) Inventor: CABELLO ERAS, Juan José, Barranquilla (CO); SANCHEZ COMAS, Andrés Gabriel, Barranquilla (CO); SOUSA SANTOS, Vladimir, Barranquilla (CO)
(74) Representative: Arnold & Siedsma
(86) International application number: PCT/IB2019/056582
(87) International publication number: WO 2020/026195

(56) References cited:
- US-A- 1 921 042
- US-A- 3 106 343
- US-A- 4 564 775
- US-A- 4 868 437
- US-A- 4 868 437
- US-A1- 2008 185 926
- US-A1- 2012 175 978
- US-A1- 2015 265 987
- US-A1- 2017 366 071
- US-B2- 8 334 626
- US-B2- 9 112 387

## Description

### BACKGROUND OF THE INVENTION

Electric motor driven systems represent between 43% and 46% of global electricity consumption and generate 6040 Mt of CO₂ emissions approximately every year. In the industrial field, motor consumption represents approximately 68% of total electric energy consumption. In the United States and the European Union, this consumption is between 65% and 75%, while in Canada it reaches 80%, demonstrating the importance of taking actions that reduce their energy consumption. Among the measures that have been taken are the improvement in designs and materials to reduce losses and improve efficiency, the appropriate selection according to the function performed, the improvement in the efficiency of the driving mechanisms, and the gradual replacement of standard efficiency motors by high efficiency motors.

The energy losses in three-phase induction motors are divided into copper losses of the stator and rotor, core losses, additional losses and friction and whipping losses, the latter produced by the cooling air fan. Among these, friction and whipping losses represent approximately 1.2% of electricity consumption, being very significant in large motors with a continuous operation (SI) regime of around 5000 hours per year.

Whipping losses are permanent because in induction motors, the cooling fan is fixed to the axis rotating next to it, although cooling is not always required. Several patents with an alternative to a conventional cooling mechanism have been published; however, they are very different from those proposed in this invention, as disclosed by patent No. JP4008899, which presents a cooling device for an electric motor with a unidirectional clutch that couples the cooling fan with the shaft while the motor is running and disengages the fan when the motor is turned off, allowing it to remain in rotation due to the inertia effect and to continue cooling the motor for an additional time after the shaft has stopped.

Another cooling mechanism, although for motors of the automobile steering system and not for three-phase motors, is the one disclosed in patent No. US5557930A, which comprises a device where the cooling fan is operatively connected to the motor by a clutch and is provided with a control circuit which has the function of operating the clutch that disengages the cooling fan when it is required to supply hydraulic fluid in the steering system.

In the field of motor clutches, patent No. US3280352 presents an automatic magnetic clutch brake to reduce braking inertia in an electric motor. The mechanism disengages the motor shaft from the inertial mass when the power supply is interrupted and engages the operation when the power supply is restored.

Patent No. US4868437 discloses an assembly where the coupling between the shaft and the fan occurs based on the temperature of the rotor and a mechanical element of high thermal expansion.

The abstract of US 9112387 B2 states: 'The disclosure relates to an air-cooled electromechanical system having a rotor, a driver element, and a fan impeller, the rotor comprising a rotor shaft and field winding. Said disclosure proposes that the fan impeller is rotatably mounted on the rotor shaft and can be connected to and/or disconnected from the rotor and/or the rotor shaft by an automatic clutch.'

In view of the above mentioned prior art documents, it is necessary to develop a device that reduces the whipping losses due to the ventilation system and improves the operation efficiency of the three-phase induction motors for industrial use.

Therefore, the present invention presents a device that allows the intermittent operation of the cooling fan, with a mechanism controlled by the stator temperature, and which also comprises a temperature data storage and communication system that allows diagnosis of failures, detection of operational changes or other applications.

### DESCRIPTION OF THE INVENTION

The object of the present invention is to provide a device according to claim 1 that allows the intermittent operation of the cooling fan, with a mechanism controlled by the stator temperature, to reduce whipping losses and improve the operating efficiency of three-phase induction motors for industrial use as those that operate pumps, compressors, conveyors, fans, welding machines and die cutters among others.

The device for intermittent operation of the three-phase induction motor cooling fan controlled by the stator winding temperature is operated by sensing the temperature of the stator winding constantly, temperature that depends on the motor insulation system.

The device senses the stator winding temperature permanently and according to the motor insulation system, the controller compares the sensed temperature with a minimum and maximum temperature range. The fan remains disconnected if the stator winding temperature is below the minimum temperature or if it exceeds the minimum temperature but does not exceed the maximum temperature.

The fan is switched on if the stator winding temperature is higher than the maximum permissible temperature and is switched off only when the stator winding temperature is reduced to a temperature lower than the minimum permissible temperature.

The NEMA standard (National Electrical Manufacturers Association, Standard for Motors and Generators) establishes the design and construction features that three-phase induction electric motors must meet. Among these, the maximum permissible operating temperature is defined according to the class of the insulation system. To avoid continuous processes of switching on and off the device, a minimum temperature is set, 5°C below the maximum operating temperature. The following table shows these temperature ranges. The insulation system class is shown on the motor nameplate.

**Table 1. Maximum permissible operating temperature according to the insulation system class.**

| Insulation system Class | Minimum permissible operating temperature (°C) | Maximum permissible operating temperature (°C) |
|---|---|---|
| A | 70 | 75 |
| B | 90 | 95 |
| F | 110 | 115 |
| H | 125 | 130 |

The device can be adapted to a motor during its manufacture or exploitation and consists of a temperature sensor, a linear electric actuator, a thermostat that opens and closes the actuator power circuit and a mechanical coupling system between the fan and the motor shaft.

In a particular embodiment, the temperature sensor may be coupled to the motor stator winding and the thermostat together with the linear actuator to the motor casing. In this embodiment, the sensor measures the stator winding temperature and sends the corresponding signal to the thermostat so that it operates the linear actuator, arranged in the motor casing, and the coupling or disengagement of the fan is carried out.

In another particular embodiment, the sensor is in the stator winding, the controller in the control box and the linear actuator in the motor casing, such that once the sensor measures the stator winding temperature, it sends the signal to the controller, which in turn operates the linear actuator for the coupling or disengagement of the fan.

In a further particular embodiment, the thermostat is arranged in the motor stator winding to directly operate the linear actuator that is in the motor casing, thereby carrying out the coupling or disengagement of the fan.

In a last embodiment, the sensor is in the stator winding, the thermostat and the linear actuator in the motor casing and the controller in a control box, separate from the sensor, the thermostat and the linear actuator. In this embodiment, the motor stator winding sensor sends a signal to the thermostat so that it in turn operates the linear actuator and the fan is coupled or uncoupled, this sensor also sends a signal to the controller to activate the alarms, send the information to the external connector and the data transmission and storage module.

Additionally, in any of the previous embodiments, the device may optionally comprise a separate controller that activates the visual and audible alarm, sends sensed temperature information to the data transmission and storage module so that it in turn activates the data transmission antenna, and sends a signal to the external connector so that through it a device measures the stator winding temperature and the motor temperature is visualized through a data display module, all this optionally included in a control box.

### DESCRIPTION OF THE FIGURES

**Figure 1****.** Three-phase electric induction motor for industrial use.
**Figure 2****.** Side view of the three-phase electric induction motor for industrial use with coupling and re- position of the clutch mechanism.
**Figure 3****.** Side view of three-phase electric induction motor for industrial use
**Figure 4****.** Top view of the three-phase electric induction motor for industrial use with the control box.
**Figure 5****.** Enlarged view of the motor shaft coupling flange.
**Figure 6****.** Enlarged view of the fan coupling flange.
**Figure 7****.** Sectional view of the clutch mechanism.
**Figure 8****.** Exploded view of the fan side coupling mechanism.
**Figure 9****.** Exploded view of the motor side coupling mechanism.
**Figure 10****.** Intermittent operation of the motor cooling fan.
**Figure 11****.** Intermittent operation of the motor cooling fan where the temperature sensor is coupled to the motor stator winding and the thermostat together with the linear actuator to the motor casing.
**Figure 12****.** Intermittent operation of the motor cooling fan where the stator winding, thermostat and linear actuator are in the motor casing and the controller in a control box, separate from the sensor, thermostat and linear actuator.
**Figure 13****.** Intermittent operation of the motor cooling fan with a control box.

### DETAIL DESCRIPTION OF THE INVENTION

In order to provide a detailed description of the invention, the device for the intermittent operation of the cooling fan of a three-phase electric induction motor is described, based on the figures provided.

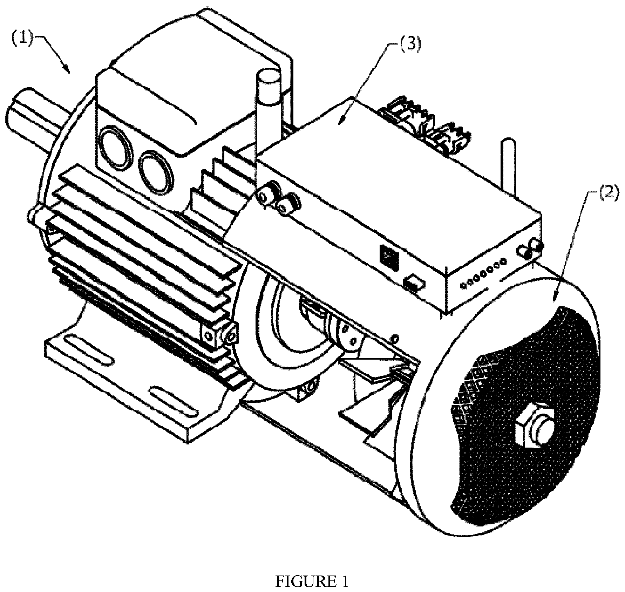

Figure 1 shows the three-phase electric induction motor for industrial use consisting of a motor (1), a fan casing (2) and a control box (3).

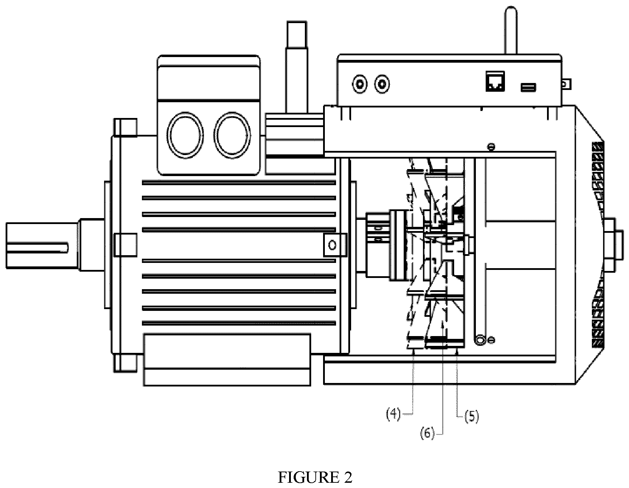

In Figure 2, the coupling (4) and disengagement (5) position of the cooling fan (6) can be observed.

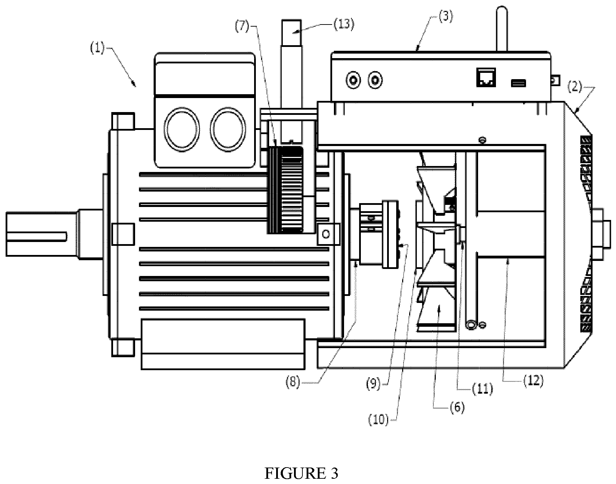

Figure 3 shows the mechanical elements that allow the intermittent operation of the cooling fan. As can be seen, the motor shaft (8) and the cooling fan (6) are normally decoupled. These are coupled when the intermittent connection device of the cooling fan (6) is operated, by joining the shaft coupling flange (9) and the fan coupling flange (10). The fan coupling flange is assembled to the cooling fan (6), the linear actuator (11) and the actuator support (12). The intermittent coupling is operated according to the temperature measured by the temperature sensor (13) in the motor stator winding (7).

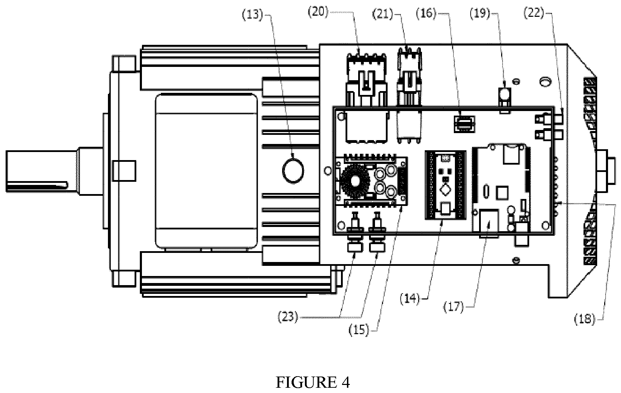

Figure 4 shows the control box (3) with the electronic elements that allow the intermittent operation of the cooling fan. These elements, which are electrically connected to a conventional electronic board, allow collecting the temperature signal, processing the signal by comparison with the reference temperatures, and sending the operation signal to the mechanical elements of the device and the data storage and transmission. The electronic elements are: the controller (14), a DC power supply (15), a temperature range selector (16), a data transmission and storage module (17), a data display module (18 ), a data transmission antenna (19), the connector for the visual and audible alarm (20), the sensor connector (21), the external meter connectors (22) and the power supply connectors (23).

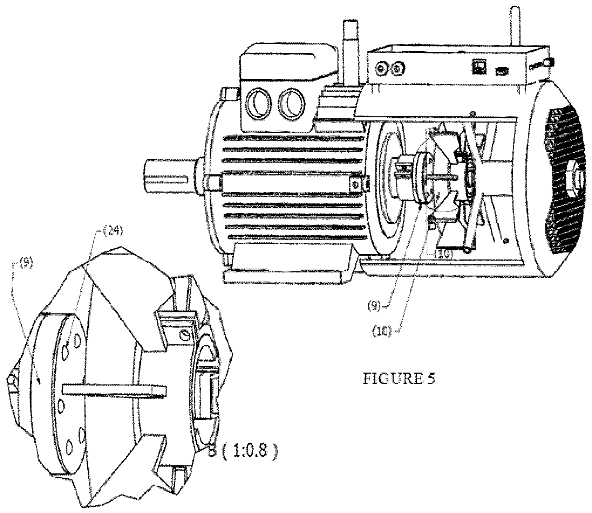

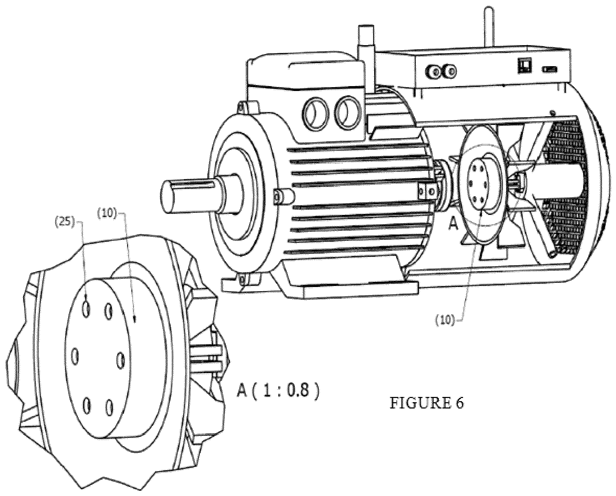

Figure 5 shows the coupling flange of the motor shaft (9) with cylindrical geometric shape and some metal balls properly inserted (24) for assembly with the fan coupling shaft (10) shown in figure 6. The fan coupling flange (10) has geometric-shaped holes (25) identical to that of the balls (24) of the motor shaft coupling flange (9) (Figure 5).

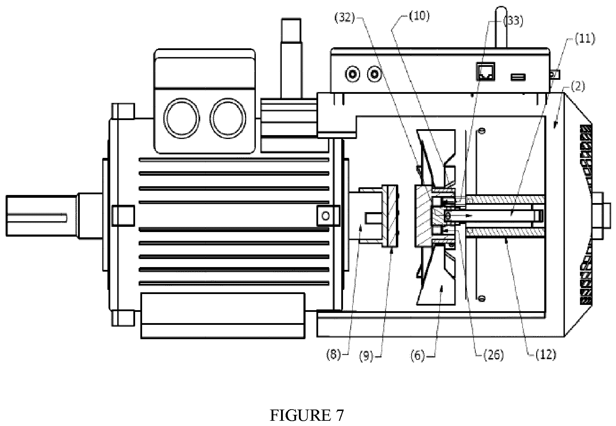

When the operating temperature reaches the maximum set temperature, the linear actuator (11) (Figure 7) is engaged, pushing the flange that supports the cooling fan (10) axially towards the flange that is fixed to the shaft (9), producing the contact between the two flanges. In the first moments of the contact, friction is established for a short period of time, until the balls of the shaft flange (24) are introduced into the holes (25) of the flange that supports the cooling fan (10), the shaft being coupled with the cooling ventilation system.

Figure 7 shows the linear actuator support (12) that externally supports and covers the linear actuator (11) up to a length of ¾ of the actuator length. The linear actuator is coupled to the inside of the fan bearing (26) and this in turn is fixed to the fan and the coupling flange.

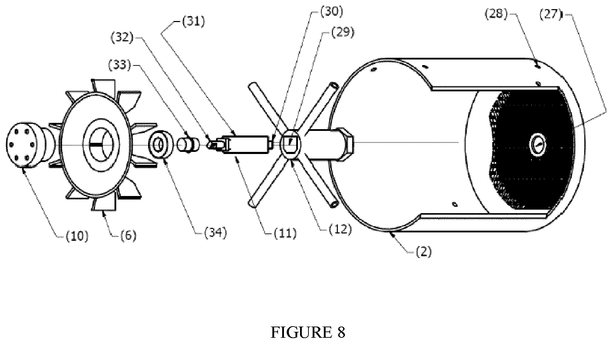

The linear actuator support (12), shown in Figure 8, is fixedly coupled at one end through a circular hole (27) located at the rear of the casing (2), ensuring that the mechanism is concentric. At the other end there is also a fastening means composed of four or more supports fixed by means of screws in the side holes (28) of the casing. This allows a symmetric distribution along the circumference of the linear actuator support (29).

The linear actuator (11) is assembled inside the linear actuator support and comprises three sections. The first section has a cylindrical shape (30), the second section (31) is the longest and has a hexagonal shape as shown in Figure 8, while the third section (32) has a cylindrical shape with a bypass that engages with the axis of the linear actuator (33). This in turn is introduced into the bearing (34).

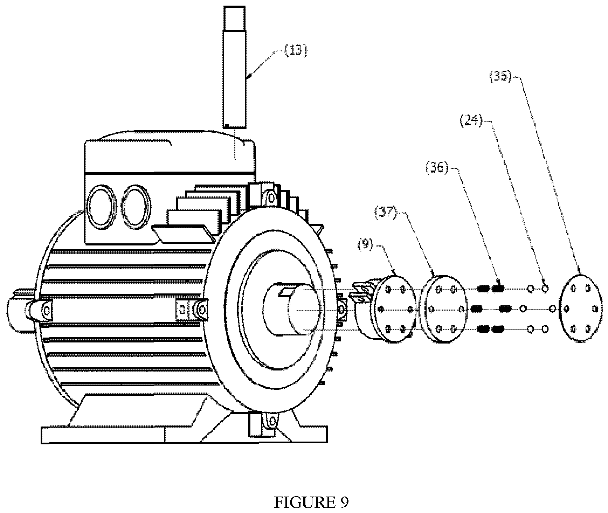

Figure 9 shows the inside of the shaft flange (9) formed by the ball socket (35), the metal balls (24) and the springs (36) together with the spring socket (37). This flange is assembled to the motor shaft (8).

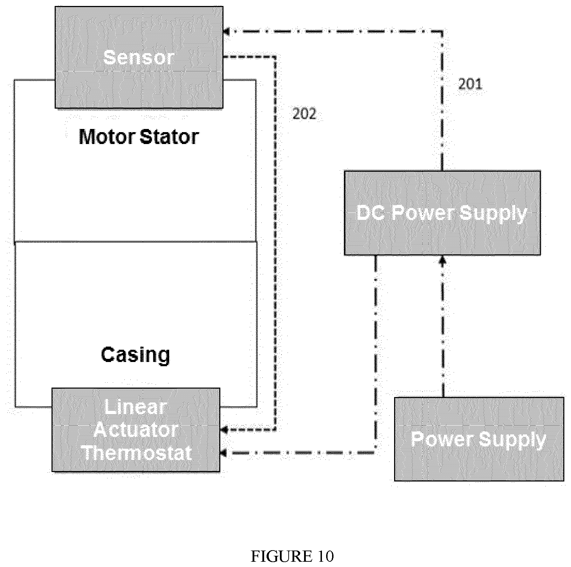

Figure 10 illustrates the direction (201, 202) of the power supply and the signal of the device for intermittent operation of the linear actuator for intermittent coupling of the cooling fan of the three-phase induction motor controlled by the stator winding temperature, carried out by the thermostat by sensing the stator winding temperature constantly.

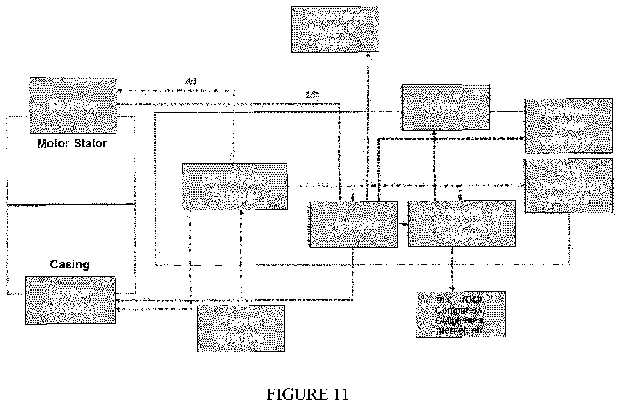

In the particular embodiment of Figure 11, the temperature sensor is coupled to the motor stator winding and the thermostat together with the linear actuator to the motor casing. In this embodiment the sensor measures the stator winding temperature and sends the signal (202) to the thermostat so that it operates the linear actuator, arranged in the motor casing, and the fan is coupled or uncoupled.

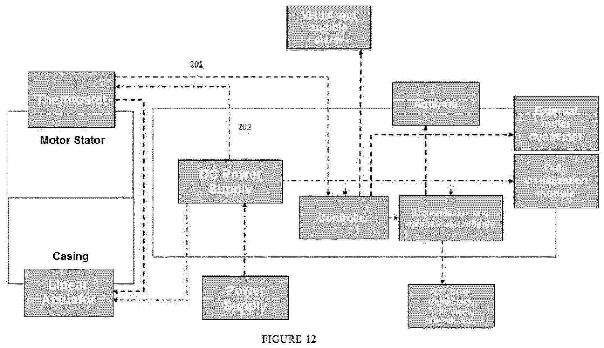

In the embodiment of Figure 12, the sensor is in the stator winding, the thermostat and the linear actuator in the motor casing and the controller in a control box, separate from the sensor, the thermostat and the linear actuator. In this embodiment, the motor stator winding sensor sends a signal (202) to the thermostat so that it in turn activates the linear actuator and the fan is coupled or uncoupled, this sensor also sends a signal (202) to the controller so that it activates the alarms, sends the information to the external connector and to the data transmission and storage module.

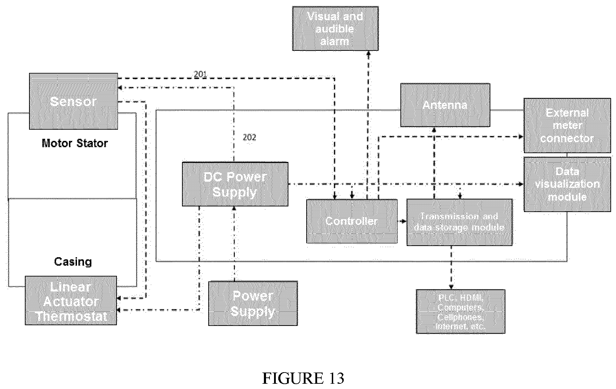

Additionally, in any of the above embodiments, the device may optionally comprise a separate controller that activates the visual and audible alarm, which sends sensed temperature information to the data transmission and storage module so that it in turn activates the data transmission antenna, and sends a signal (202) to the external connector so that through it a device measures the stator winding temperature and it is displayed through a motor temperature data display module, all optionally included in a control box (see Figure 13).

## Claims

1. A device for intermittent operation of a cooling fan of a three-phase electric induction motor comprising:
an electric motor (1), a motor shaft (8), a cooling fan (6), a fan casing (2),
a clutch mechanism located between the fan (6) and the motor shaft (8) and consisting of two flanges, the first one, the shaft coupling flange (9), mounted on the motor shaft (8) and configured to rotate next to the motor,
a coupling flange (10), coupled to the fan (6) and an electric linear actuator fixed at the rear of the fan casing (2), wherein the linear electric actuator (11) engages and disengages the coupling flange (10) with the shaft coupling flange (9),
a temperature sensor (13) placed in the motor stator winding (7),
a thermostat that responds to the temperature sensor (13) installed in the motor stator winding (7) and operates the linear actuator (11), such that an intermittent coupling between the fan (6) and the motor shaft (8) is operated according to the temperature measured by the temperature sensor (13).

2. The device for intermittent operation of the cooling fan of a three-phase electric motor according to claim 1, wherein the shaft coupling flange (9) also has metal balls (24) supported by springs incorporated into its surface.

3. The device for intermittent operation of the cooling fan of a three-phase electric motor according to claim 1, wherein the fan coupling flange (10) has on its surface spherical cavities (26) in accordance with the balls (24) of the first flange.

4. The device for intermittent operation of the cooling fan of a three-phase electric motor according to claim 1, wherein a control box (3) comprises a controller (14), a DC power supply (15), a temperature range selector (16), a data transmission and storage module (17), a data display module (18), a data transmission antenna (19) and four connectors (20), (21), (22), (23), wherein these devices are electrically connected on a conventional electronic board.

5. The device for intermittent operation of the cooling fan of a three-phase electric motor according to claim 4, wherein the connectors are derived from the group comprising the connector for the visual and audible alarm (20), the sensor connector (21), the external meter connectors (22) and the power supply connectors (23).

6. The device for intermittent operation of the cooling fan of a three-phase electric motor according to claim 5, wherein the power supply connector (23) is coupled by mounting the fan mechanism casing (2) with the motor casing (2), wherein additionally the wired connection of the temperature sensor (13) installed in the motor stator winding (7) is connected to the thermostat and the data transmission and storage module (17).

7. The device for intermittent operation of the cooling fan of a three-phase electric motor according to claim 4, wherein the data transmission and storage module (17) that is inside the control box (3), comprises a memory, a wireless and Ethernet system for storing, obtaining and transmitting temperature data.

8. The device for intermittent operation of the cooling fan of a three-phase electric motor according to claim 4, wherein the signaling module indicates the operating temperature range and the coupling or decoupling of the system.

9. The device for intermittent operation of the cooling fan of a three-phase electric motor according to claim 4, wherein the temperature range selector selects a temperature according to the motor insulation system and sets the operating temperature range of the thermostat.

10. The device for intermittent operation of the cooling fan of a three-phase electric motor according to claim 4, wherein the controller is connected to a monitoring center via wired and wireless communication lines that activate a visual or audible alarm, when the motor is exceeding the temperature range.

11. The device for intermittent operation of the cooling fan of a three-phase electric motor according to claim 1, wherein the fan coupling mechanism comprises the coupling flange (10), the fan (6), the fan bearing (26), the linear actuator shaft (33), the linear actuator (11) and the linear actuator support (12) assembled together inside the casing (2).

12. The device for intermittent operation of the cooling fan of a three-phase electric motor according to claim 1, wherein the motor shaft coupling mechanism comprises the engagement of the metal balls (35), the metal balls (24) and the springs (36) together with the spring fitting (37) and the shaft coupling flange (9) assembled to the motor shaft (8).

13. The device for intermittent operation of the cooling fan of a three-phase electric induction motor according to claim 1, wherein:
the temperature sensor is coupled to the motor stator winding;
the thermostat and linear actuator are coupled to the motor casing;
wherein the sensor measures the stator winding temperature and sends the signal to the thermostat, so that it in turn operates the linear actuator and the fan is coupled or disengaged.

14. The device for intermittent operation of the cooling fan of a three-phase electric induction motor according to claim 1, wherein:
the temperature sensor is coupled to the motor stator winding;
the controller is in the control box; and
the linear actuator is arranged in the motor casing;
wherein the sensor measures the stator winding temperature, the signal is sent to the controller and the linear actuator that couples or uncouples the fan is activated.

15. The device for intermittent operation of the cooling fan of a three-phase electric induction motor according to claim 1, wherein:
the thermostat is arranged in the motor stator winding,
the linear actuator that couples or disengages the fan is located in the motor casing.

## Patentansprüche

1. Vorrichtung zur intermittierenden Betätigung des Kühlgebläses eines elektrischen Drehstrom-Induktionsmotors, umfassend:
einen elektrischen Motor (1), eine Motorwelle (8), eine Kühlgebläse (6), ein Gebläsegehäuse (2),
einen Kupplungsmechanismus, der zwischen dem Gebläse (6) und der Motorwelle (8) angeordnet ist und aus zwei Flanschen besteht, von denen der erste, der Wellenkupplungsflansch (9), an dem Wellenmotor (8) angebracht und so ausgelegt ist, dass er sich gemeinsam mit dem Motor dreht,
einen mit dem Gebläse (6) gekoppelten Kupplungsflansch (10) und ein an der Rückseite des Gebläsegehäuses (2) befestigtes elektrisches Linearstellglied, wobei das elektrische Linearstellglied (11) den Kupplungsflansch (10) und den Wellenkupplungsflansch (9) koppelt und entkoppelt,
einen Temperatursensor (13), der in der Statorwicklung (7) des Motors angeordnet ist,
einen in der Statorwicklung (7) des Motors eingebauten Thermostat, der auf den Temperatursensor (13) anspricht und den Linearantrieb (11) betätigt, so dass eine intermittierende Kopplung zwischen dem Gebläse (6) und der Motorwelle (8) entsprechend der von dem Temperatursensor (13) gemessenen Temperatur erfolgt.

2. Vorrichtung zur intermittierenden Betätigung des Kühlgebläses eines elektrischen Drehstrommotors nach Anspruch 1, wobei der Wellenkupplungsflansch (9) ebenfalls Metallkugeln (24) aufweist, die durch in seiner Oberfläche eingesetzte Federn gelagert sind,

3. Vorrichtung zur intermittierenden Betätigung des Kühlgebläses eines elektrischen Drehstrommotors nach Anspruch 1, wobei der Gebläsekupplungsflansch (10) auf seiner Oberfläche kugelige Hohlräume (26) aufweist, welche den Kugeln (24) des ersten Flansches entsprechen.

4. Vorrichtung zur intermittierenden Betätigung des Kühlgebläses eines elektrischen Drehstrommotors nach Anspruch 1, wobei ein Schaltkasten (3) eine Steuerung (14), eine Gleichstromversorgung (15), einen Temperaturbereichswähler (16), ein Datenübertragungs- und Speichermodul (17), ein Datenanzeigemodul (18), eine Datenübertragungsantenne (19) und vier Verbinder (20), (21), (22), (23) aufweist, wobei diese Einrichtungen elektrisch auf einer herkömmlichen elektronischen Platine verbunden ist.

5. Vorrichtung zur intermittierenden Betätigung des Kühlgebläses eines elektrischen Drehstrommotors nach Anspruch 4, wobei die Verbinder aus der Gruppe stammen, die umfasst: den Verbinder für den optischen und akustischen Alarm (20), den Verbinder für den Sensor (21), die Verbinder für die externen Messungen (22) und die Verbinder für die Stromversorgung (23).

6. Vorrichtung zur intermittierenden Betätigung des Kühlgebläses eines elektrischen Drehstrommotors nach Anspruch 5, wobei der Verbinder für die Stromversorgung (23) mittels Montage des Gebläsemechanismusgehäuses (2) mit dem Motorgehäuse (2) gekoppelt ist, und wobei ferner der Drahtanschluss des in der Statorwicklung (7) des Motors eingebauten Temperatursensors (13) mit dem Thermostat und dem Datenübertragungs- und Speichermodul (17) verbunden ist.

7. Vorrichtung zur intermittierenden Betätigung des Kühlgebläses eines elektrischen Drehstrommotors nach Anspruch 4, wobei das innerhalb des Schaltkastens (3) angeordnete Datenübertragungs- und Speichermodul (17) einen Speicher und ein drahtloses und Ethernet-System zum Speichern, Erhalten und Übertragen von Temperaturdaten umfasst.

8. Vorrichtung zur intermittierenden Betätigung des Kühlgebläses eines elektrischen Drehstrommotors nach Anspruch 4, wobei das Signalübertragungsmodul den Betriebstemperaturbereich und die Kopplung bzw. Entkopplung des Systems anzeigt.

9. Vorrichtung zur intermittierenden Betätigung des Kühlgebläses eines elektrischen Drehstrommotors nach Anspruch 4, wobei der Temperaturbereichswähler eine Temperatur gemäß dem Motorisolationssystem auswählt und den Betriebstemperaturbereich des Thermostats einstellt.

10. Vorrichtung zur intermittierenden Betätigung des Kühlgebläses eines elektrischen Drehstrommotors nach Anspruch 4, wobei die Steuerung mit einer Überwachungsstation über drahtgebundene oder drahtlose Kommunikationsleitungen verbunden ist, welche, wenn der Motor den Temperaturbereich überschreitet, einen optischen und akustischen Alarm aktivieren.

11. Vorrichtung zur intermittierenden Betätigung des Kühlgebläses eines elektrischen Drehstrommotors nach Anspruch 1, wobei der Gebläsekupplungsmechanismus den Kupplungsflansch (10), das Gebläse (16), das Gebläselager (26), die Linearstellgliedwelle (33), das Linearstellglied (11) und die Linearstellgliedhalterung (12), die innerhalb des Gehäuses (2) zusammengebaut sind

12. Vorrichtung zur intermittierenden Betätigung des Kühlgebläses eines elektrischen Drehstrommotors nach Anspruch 1, wobei der Motorwellenkupplungsmechanismus den Metallkugeleinsatz (35), die Metallkugeln (24) und die Federn (36) zusammen mit dem Federeinsatz (37) umfasst, sowie den Wellenkupplungsflansch (9), der an der Motorwelle (8) angebracht ist.

13. Vorrichtung zur intermittierenden Betätigung des Kühlgebläses eines elektrischen Drehstrommotors nach Anspruch 1, wobei:
der Temperatursensor mit der Statorwicklung des Motors gekoppelt ist;
der Thermostat und das Linearstellglied mit dem Motorgehäuse gekoppelt sind;
wobei der Sensor die Temperatur der Statorwicklung misst und das Signal an den Thermostat sendet, der seinerseits das lineare Stellglied betätigt, so dass das Gebläse gekoppelt bzw. entkoppelt wird.

14. Vorrichtung zur intermittierenden Betätigung des Kühlgebläses eines elektrischen Drehstrommotors nach Anspruch 1, wobei:
der Temperatursensor mit der Statorwicklung des Motors gekoppelt ist;
die Steuerung sich im Schaltkasten befindet; und
das Linearstellglied im Motorgehäuse angeordnet ist;
wobei der Sensor die Temperatur der Statorwicklung misst, wobei das Signal von der Steuerung gesendet wird, und das lineare Stellglied, das das Gebläse koppelt bzw. entkoppelt, aktiviert wird.

15. Vorrichtung zur intermittierenden Betätigung des Kühlgebläses eines elektrischen Drehstrommotors nach Anspruch 1, wobei:
der Thermostat in der Statorwicklung des Motors angeordnet ist,
das Linearstellglied, das das Gebläse koppelt bzw. entkoppelt sich im Motorgehäuse befindet.

## Revendications

1. Dispositif pour l'actionnement intermittent du ventilateur de refroidissement d'un moteur électrique triphasé à induction comprenant :
un moteur électrique (1), un arbre de moteur (8), un ventilateur de refroidissement (6), un carter de ventilateur (2),
un mécanisme d'embrayage situé entre le ventilateur (6) et l'arbre de moteur (8) et constitué de deux brides, dont la première, la bride d'accouplement à l'arbre (9), est montée sur l'arbre de moteur (8) et conçue pour tourner conjointement au moteur,
une bride d'accouplement (10), couplée au ventilateur (6) et un actionneur linéaire électrique fixé à l'arrière du carter de ventilateur (2), ledit actionneur linéaire électrique (11) couplant et découplant la bride d'accouplement (10) et la bride d'accouplement à l'arbre (9),
un capteur de température (13) placé dans le bobinage du stator du moteur (7),
un thermostat, installé dans le bobinage du stator du moteur (7), qui répond au capteur de température (13) et actionne l'actionneur linéaire (11), de telle manière qu'un couplage intermittent entre le ventilateur (6) et l'arbre de moteur (8) est réalisé conformément à la température mesurée par le capteur de température (13).

2. Dispositif pour l'actionnement intermittent du ventilateur de refroidissement d'un moteur électrique triphasé selon la revendication 1, dans lequel la bride d'accouplement à l'arbre (9) comporte également des billes métalliques (24) supportées par des ressorts insérés dans sa surface.

3. Dispositif pour l'actionnement intermittent du ventilateur de refroidissement d'un moteur électrique triphasé selon la revendication 1, dans lequel la bride d'accouplement au ventilateur (10) présente, sur sa surface, des cavités sphériques (26) correspondant aux billes (24) de la première bride.

4. Dispositif pour l'actionnement intermittent du ventilateur de refroidissement d'un moteur électrique triphasé selon la revendication 1, dans lequel une boîte de commande (3) comprend un contrôleur (14), une alimentation CC (15), un sélecteur de plage de température (16), un module de transmission et de stockage de données (17), un module de visualisation de données (18), une antenne de transmission de données (19) et quatre connecteurs (20), (21), (22), (23), ces dispositifs étant reliés électriquement sur une carte électronique conventionnelle.

5. Dispositif pour l'actionnement intermittent du ventilateur de refroidissement d'un moteur électrique triphasé selon la revendication 4, dans lequel les connecteurs proviennent du groupe comprenant : le connecteur pour l'alarme visuelle et sonore (20), le connecteur du capteur (21), les connecteurs pour les mesures externes (22) et les connecteurs pour l'alimentation (23).

6. Dispositif pour l'actionnement intermittent du ventilateur de refroidissement d'un moteur électrique triphasé selon la revendication 5, dans lequel le connecteur pour l'alimentation (23) est couplé par assemblage du carter du mécanisme du ventilateur (2) avec le carter du moteur (2), et dans lequel en outre la connexion filaire du capteur de température (13) installé dans le bobinage du stator du moteur (7) est reliée au thermostat et au module de transmission et de stockage de données (17).

7. Dispositif pour l'actionnement intermittent du ventilateur de refroidissement d'un moteur électrique triphasé selon la revendication 4, dans lequel le module de transmission et de stockage de données (17) disposé à l'intérieur de la boîte de commande (3) comprend une mémoire et un système sans fil et Ethernet permettant le stockage, l'obtention et la transmission de données de température.

8. Dispositif pour l'actionnement intermittent du ventilateur de refroidissement d'un moteur électrique triphasé selon la revendication 4, dans lequel le module de transmission de signaux indique la plage de température de service et le couplage ou découplage du système.

9. Dispositif pour l'actionnement intermittent du ventilateur de refroidissement d'un moteur électrique triphasé selon la revendication 4, dans lequel le sélecteur de plage de température sélectionne une température conformément au système d'isolation du moteur et règle la plage de température de service du thermostat.

10. Dispositif pour l'actionnement intermittent du ventilateur de refroidissement d'un moteur électrique triphasé selon la revendication 4, dans lequel le contrôleur est relié à une centrale de surveillance par des lignes de communication filaires ou sans fil qui activent une alarme visuelle et sonore lorsque le moteur dépasse la plage de température.

11. Dispositif pour l'actionnement intermittent du ventilateur de refroidissement d'un moteur électrique triphasé selon la revendication 1, dans lequel le mécanisme de couplage du ventilateur comprend la bride d'accouplement (10), le ventilateur (16), le palier du ventilateur (26), l'arbre de l'actionneur linéaire (33), l'actionneur linéaire (11) et le support de l'actionneur linéaire (12) assemblés ensemble au sein du carter (2).

12. Dispositif pour l'actionnement intermittent du ventilateur de refroidissement d'un moteur électrique triphasé selon la revendication 1, dans lequel le mécanisme de couplage de l'arbre de moteur comprend l'emboîture des billes métalliques (35), les billes métalliques (24) et les ressorts (36) ainsi que l'emboîture des ressorts (37) et la bride d'accouplement à l'arbre (9) assemblée à l'arbre de moteur (8).

13. Dispositif pour l'actionnement intermittent du ventilateur de refroidissement d'un moteur électrique triphasé à induction selon la revendication 1, dans lequel :
le capteur de température est couplé au bobinage du stator du moteur ;
le thermostat et l'actionneur linéaire sont couplés au carter du moteur ;
ledit capteur mesurant la température du bobinage du stator et envoyant le signal au thermostat, qui à son tour actionne l'actionneur linéaire de manière qu'il y ait couplage ou découplage du ventilateur.

14. Dispositif pour l'actionnement intermittent du ventilateur de refroidissement d'un moteur électrique triphasé à induction selon la revendication 1, dans lequel :
le capteur de température est couplé au bobinage du stator du moteur ;
le contrôleur est situé dans la boîte de commande ; et
l'actionneur linéaire est agencé dans le carter du moteur ;
ledit capteur mesurant la température du bobinage du stator, le signal étant envoyé par le contrôleur, et l'actionneur linéaire qui couple ou découple le ventilateur est activé.

15. Dispositif pour l'actionnement intermittent du ventilateur de refroidissement d'un moteur électrique triphasé à induction selon la revendication 1, dans lequel :
le thermostat est agencé dans le bobinage du stator du moteur,
l'actionneur linéaire qui couple ou découple le ventilateur est situé dans le carter du moteur.
